# EUROPEAN PATENT SPECIFICATION

(11) **EP 3 677 355 B1**
(45) Date of publication and mention of the grant of the patent: **24.01.2024**
(21) Application number: 18849942.0
(22) Date of filing: 18.04.2018
(51) Int. Cl.: B21B 27/02, B23K 26/00

(54) **ROLL FOR ROLLING SURFACE TOPOGRAPHY OF STEEL PLATE AND METHOD FOR MANUFACTURING SAME**
WALZE ZUM WALZEN DER OBERFLÄCHENTOPOGRAFIE EINER STAHLPLATTE UND VERFAHREN ZUR HERSTELLUNG DAVON
ROULEAU POUR TOPOGRAPHIE DE SURFACE DE ROULEMENT D'UNE PLAQUE D'ACIER ET SON PROCÉDÉ DE FABRICATION

(30) Priority: 29.08.2017 CN 201710758712
(43) Date of publication of application: 08.07.2020
(73) Proprietor: Baoshan Iron & Steel Co., Ltd., Shanghai 201900 (CN)
(72) Inventor: CHEN, Xiaoming, Shanghai 201900 (CN); LI, Shanqing, Shanghai 201900 (CN); YANG, Kaifu, Shanghai 201900 (CN); QUAN, Jizhe, Shanghai 201900 (CN)
(74) Representative: Kuhnen & Wacker Patent- und Rechtsanwaltsbüro PartG mbB
(86) International application number: PCT/CN2018/083469
(87) International publication number: WO 2019/041828

(56) References cited:
- CN-A- 1 418 740
- CN-A- 101 204 755
- CN-A- 101 642 778
- DE-A1- 19 529 429
- JP-A- H0 215 808
- JP-A- H02 197 301
- JP-A- 2005 034 865

## Description

### TECHNICAL FIELD

The present invention relates to a roll for rolling a steel plate and a method for manufacturing the same and particularly relates to a roll with a special surface topography and the method for manufacturing the roll.

### BACKGROUND

Generally, both a last rolling procedure of a cold-rolling mill and a working roll of a cold rolling leveler need to use a textured roll, i.e., a roll, of which the surface has certain roughness, and thus, a surface of a steel plate can have a certain surface topography.

The existing roll texturing techniques mainly comprise shot blast texturing, an electro-discharge texturing technique, a laser texturing technique, an electron beam texturing technique and a chromium plating texturing technique. Surface topography structures formed by shot blast texturing, electro-discharge texturing, laser texturing and electron beam texturing are all dominated by pit shapes. The surface topographies of such structures during rolling have the disadvantages that the topography copying ratio is relatively low, and pits are easily filled with metal powder, and thus the roughness is rapidly attenuated. A plurality of semispherical convex hulls can be grown on the surface of the roll through reasonably controlling electrochemical process parameters of an electroplating process by the chromium plating texturing technique. The surface topography of such structure has a higher topography copying ratio and a great number of small pits are distributed on the rolled steel plate, which improves an oil storage effect of the steel plate. However, the biggest disadvantage of this technique is that by adopting a chromium electroplating process, the environmental protection is at a great risk.

In addition, according to the above roll texturing techniques, although the roughness, peak value, waviness, etc. of the surface of a textured roll can be properly adjusted by properly adjusting the process parameters, the extent of such adjustment is very limited. The surface topography formed through texturing still has some inherent characteristics, and each textured point cannot be specifically controlled. Thus, the surface topography cannot be subjected to refined designing and controlling.

On the other hand, more and more users have set higher requirements on steel plate coating effect. Researches show that the steel plate coating effect can be effectively improved through lowering the surface waviness of the steel plate. For steel plant, the waviness of the roll is required to be controlled. But for the traditional texturing methods, the surface topography is difficult to subject to refined designing and processing, and thus, the traditional texturing methods have limitations in the aspect of waviness control.

In summary, the existing texturing methods have the main problems that surface morphologies are of pit structures or the environmental protection risk is present and the surface morphologies cannot be subjected to refined designing and controlling.

A Chinese patent publication No.CN104884180A, published September 2, 2015, entitled "a flat plate product made of a metallic material, particularly a steel material, use of the flat plate product, a roll and a method for producing the flat plate product" relates to a flat plate product made of a metallic material, particularly a steel material, beneficial use, a roll particularly suitable for manufacturing the flat plate product and a method for producing the flat plate product. A technical scheme disclosed in the patent publication discloses a roll with dual-I-shaped, H-shaped, cross-shaped, C-shaped or X-shaped definite texture. According to the technical scheme, although a refined design and processing of a surface microscopic structure can be achieved and the waviness can also be properly lowered, the surface topography is still dominated by pits, and the topography copying ratio of the roll is not improved. In addition, the surface topography of the roll is a texture topography with specific rules, therefore, a steel plate produced by using such roll is prone to generate a Moire pattern defect during coating.

A Chinese patent publication No.CN103889642B, published April 13, 2016, entitled "a method and equipment for producing a structured surface on an embossed steel roll" relates to a method and equipment for producing a structured surface on an embossed steel roll through a short-pulse laser. This structure is a macroscopic structure, and the macroscopic structure has a dimension exceeding 20µm and a depth reaching 200µm or more; and a short-pulse processed embossed steel roll with a special pattern structure is disclosed. The technical scheme relates to refined designing and processing of a surface microscopic structure. However, the surface topography is also dominated by pits, and the surface topography structure of the roll is not effectively improved.

JP H02 15808 A shows a roll for rolling a surface topography of a steel plate wherein a plurality of raised textured points are arranged on a roll surface; a shape of each single textured point is circular or approximately circular, and the circular shape has a diameter of 10 - 2000 µm; the each single textured point has a raised height of 4.4 - 2.7 µm, and the overlap among adjacent textured points is lower than 10 %; and the quantity variance of the textured points per square millimeter of the roll surface is lower than 20 %, and the coverage area ratio of the textured points in each square millimeter is 30 - 90 %.

In summary, some work has been done by some of the experts in the aspects of refined designing and processing of surface morphologies, but an effective technical scheme for improving the surface microscopic structure of the roll, increasing the topography copying ratio, lowering surface waviness of the roll, etc. is not proposed yet.

### SUMMARY

A technical problem to be solved by the present invention is to provide a roll with a special surface topography, wherein the roll has good topography copying ratio and low waviness when the roll is used for rolling a surface topography of a steel plate.

The technical problem can be solved by the following technical schemes.

A roll for rolling a surface topography of a steel plate is provided. A plurality of raised textured points are arranged on a roll surface. A shape of each single textured point is circular or approximately circular, and the circular shape has a diameter of 50~150µm. Each single textured point has a raised height of 2~12µm, and the overlap among adjacent textured points is lower than 10%; and the quantity variance of the textured points per square millimeter of the roll surface is lower than 20%, and the coverage area ratio of the textured points in each square millimeter is 30-90%.

The textured points are circular or approximately circular, thus, on one hand, directional difference of surface topography parameters can be avoided; on the other hand, the textured points which are independent of one another can be conveniently constructed, and mutual interference among the textured points is avoided.

Furthermore, the diameter of each single textured point is defined to 50~150µm. The reason for such restriction is that when the diameter of each textured point is smaller than 50µm, the wear resistance of the roll will be remarkably lowered due to a relatively fine surface microscopic structure when the roll is in use; and when the diameter of each textured point is greater than 150µm, the surface microscopic structure of the roll will be relatively rough and big, and the microscopic structure is not easily completely covered by a coating film during the coating of a rolled or leveled steel plate.

On the other hand, the textured points are designed as raised structures to increase surface topography copying ratio. The raised height of the textured point is designed as 2~12µm, thus, the surface of the roll can have a proper roughness range. The overlap among adjacent textured points is controlled to be lower than 10% because when the overlap among the textured points is oversized, the independence and completeness of the textured points will be destroyed and the non-uniformity of microscopic morphologies of local areas will be easily caused.

The quantity variance of the textured points per square millimeter is lower than 20%, the greater the quantity variance of the textured points of unit areas, the poorer the macroscopic uniformity of the surface topography of the roll. The coverage area ratio of the textured points in each square millimeter is 30-90%. The reason for such restriction is that when the quantity of the textured points is too small, the average spacing of the textured points will be too large, the waviness will be improved, and the coating effect of a rolled or leveled steel plate will become worse; and when the quantity of the textured points is too large, the spacing of the textured points will be too small, the molding flowing of materials will be thus affected, and the copying ratio of roughness will be lowered.

As a further improvement of the technical scheme, bottom diameters of the raised textured points are not smaller than top diameters, for example frustum-shaped structures.

Also as a further improvement of the technical scheme, the overlap among adjacent textured points is lower than 5%, wherein the overlap among the adjacent textured points is preferably 0.

Also as a further improvement of the technical scheme, the quantity variance of the textured points per square millimeter of a roll surface is lower than 10%, preferably 5%.

In addition, also as a further improvement of the technical scheme, the coverage area ratio of the textured points in each square millimeter of a roll surface is 50-80%.

In addition, the steel plate may be a cold-rolled steel plate.

Another technical problem to be solved by the present invention is to provide a manufacturing method of a roll for rolling a surface topography of a steel plate.

The method comprises the following steps:
(1) performing a surface treatment on a feed roll to control the surface roughness Ra of the roll to be smaller than 0.5µm; and
(2) performing a layer-by-layer ablation on a surface material of the roll to form the textured points.

As a further improvement of the manufacturing method, the layer-by-layer ablation on the surface material of the roll is performed by adopting an ultrashort pulse laser; and during ablation, the ultrashort pulse laser does transverse translational movement along a generatrix of the feed roll, and meanwhile, the feed roll is in a rotatable state after being driven.

Through adopting the above-mentioned roll with the special surface topography and a corresponding manufacturing technique, the surface topography can be subjected to refined designing and processing, the surface topography of the roll can be effectively improved, and the roll can have good topography copying ratio and low waviness.

### BRIEF DESCRIPTION OF THE DRAWINGS

Fig. 1 shows a microcosmic topography of a surface of a roll in an embodiment 1;
Fig. 2 shows a microcosmic topography of a surface of a roll in an embodiment 2;
Fig. 3 shows a microcosmic topography of a surface of a roll in an embodiment 3;
Fig. 4 shows a device structure corresponding to a manufacturing method of the present invention; and
Fig. 5 shows a surface manufacturing processing process corresponding to an embodiment 1, including 8 states/stages, i.e., 1) -8) ; wherein, in the Fig. 4, element 1 refers to a numerically-controlled machine, element 2 refers to a roll, and element 3 refers to an ultrashort pulse laser.

### DETAILED DESCRIPTION

Specific embodiments of the present invention are further described in detail below with reference to the drawings.

The present invention provides a roll with a special surface topography, and the surface topography of the roll has the following characteristics:
A great quantity of textured points are distributed on the surface;
Each textured point is nearly or approximately circular in shape and has a diameter of 50~150µm;
Each textured point is of a raised structure and has a raised height of 2∼12µm;
The overlap among adjacent textured points is lower than 10%;
The quantity variance of the textured points per square millimeter is lower than 20%; and The coverage area ratio of the textured points in each square millimeter is 30-90%.

Through a great deal of experimental researches, inventors discover that due to the textured points with the above-mentioned characteristics, the surface topography of the obtained roll has better topography copying ratio and low waviness.

Accordingly, another object of the present invention is to provide a method for manufacturing the roll with the special surface topography, and the roll with the above-mentioned technical characteristics can be obtained with the manufacturing method.

The method comprises the following steps:
(1) performing a grinding and polishing treatment on a roll, and cleaning a roll surface to enable surface roughness Ra of the roll to be smaller than 0.5µm and leave the surface to be free of oil stains;
(2) designing a surface topography of the roll having the above technical characteristics;
(3) driving the roll to rotate by using a numerically-controlled machine, and enabling an ultrashort pulse laser to do transverse translational movement along a generatrix of the roll; and
(4) controlling the ultrashort pulse laser to selectively perform a layer-by-layer ablation on a surface material of the roll based on the designed surface topography.

A roll with a special surface topography and a method for manufacturing the roll, disclosed by the present invention, are further explained and described below with reference to drawings and specific embodiments, however, explanations and descriptions do not improperly define a technical scheme of the present invention.

### Embodiments 1-3 and Comparative Examples 1-3:

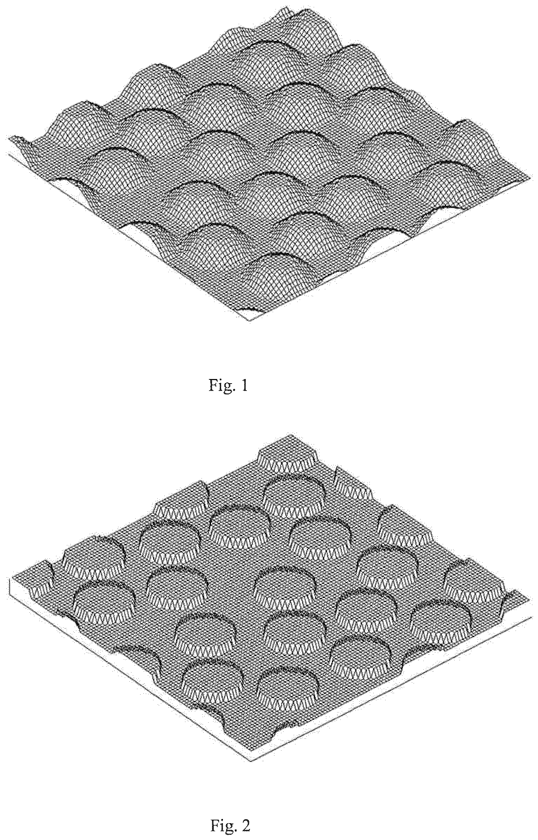

In the embodiments 1-3, a surface topography of a roll is subjected to refined designing and processing. The surface of the roll has a great deal of textured points, each textured point is approximately circular in shape, has a diameter of 50~150µm and is of a raised structure, the textured points have raised height difference of 2∼12µm, the overlap among the textured points is lower than 10%, and the coverage area ratio of the textured points in a unit area range is 30-90%. Fig. 1 through Fig. 3 shows the designed roll surface microcosmic morphologies.

Rolls in the embodiments 1-3 and the comparative examples 1-3 are tested according to a measurement standard ISO 4287:1997, wherein the filters are Gaussian filters, the sample length of roughness is 12.5mm, the sample length of waviness is 40mm, and a filtering interval is 0.8~8mm. Then, the rolls are loaded into a hot-galvanizing leveler where materials of the same specification material quality are leveled up by using substantially identical process parameters under substantially identical working conditions. The ratios of surface roughness of leveled steel plates to roughness of rolls are measured and are taken as topography copying ratio indexes.

Specific designed parameters and measurement contrast results are shown in a table 1 as follows.

**Table 1:**

| | Texture d point diamete r | Raised height | Overlap | Quantit y variance | Coverag e area | Roughn ess | Topogra phy copying ratio | Wavine ss |
|---|---|---|---|---|---|---|---|---|
| Embodim ent 1 | 100µm | 8µm | 0 | 0 | 62% | 2.13µm | 74% | 0.56µm |
| Embodim ent 2 | 100µm | 4µm | 0 | 5% | 56% | 2.17µm | 73% | 0.63µm |
| Embodim ent 3 | 80µm | 4um | 5% | 5% | 71% | 2.08µm | 78% | 0.65µm |
| Comparat ive example 1 | - | - | - | - | - | 2.15µm | 62% | 0.75µm |
| Comparat ive example 2 | - | - | - | - | - | 2.09µm | 64% | 0.70µm |
| Comparat ive example 3 | - | - | - | - | - | 2.16µm | 64% | 0.73µm |

Since microscopic structures of surface topographies of rolls have affect on copying ratios and waviness of the surface topographies of the rolls, the surface topographies of the rolls in the embodiments 1-3 are designed and the rolls are processed by adopting the manufacturing method disclosed by the present invention, such that the rolls have the characteristics that the surfaces of the rolls have a great number of textured points, wherein each textured point is approximately circular in shape with a diameter of 50∼150µm and is of a raised structure. Also, the textured points have raised height difference of 2-12µm. The overlap among all the textured points is lower than 10%, and the coverage area ratio of the textured points in a unit area range is 30-90%. While in the comparative examples 1-3, the conventional electro-discharge texturing process is adopted, therefore, the obtained ordinary roll surfaces do not have the above-mentioned characteristics. The topography copying ratios is relatively low and the waviness is relatively high.

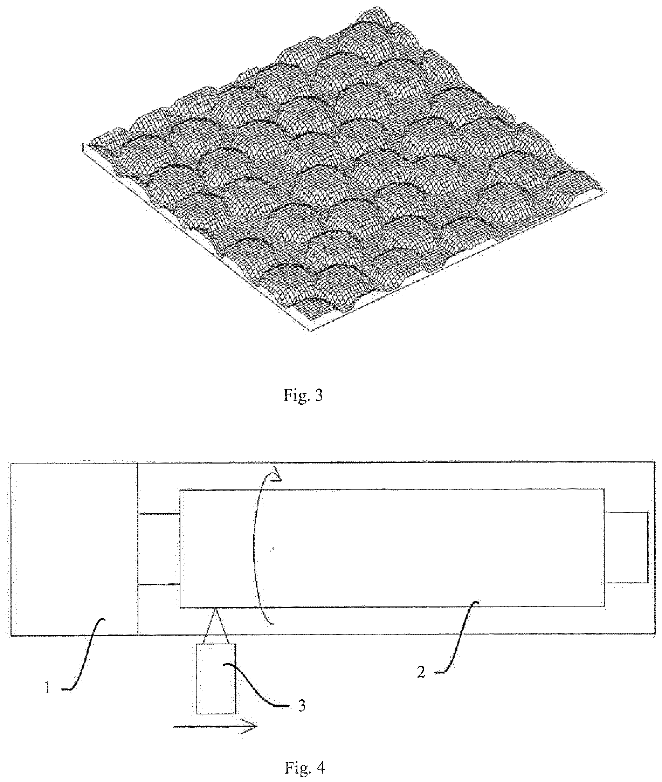

Specific implementation procedures of the roll manufacturing method disclosed by the present invention are described below by taking the embodiment 1 as an example with reference to Fig. 1, Fig. 4 and Fig. 5:
(1) performing grinding polishing treatment on a roll, and cleaning a roll surface to enable surface roughness Ra of the roll to be smaller than 0.5µm and leave the surface to be free of oil stains;
(2) designing a surface microcosmic topography of the roll, referring to Fig. 1 specifically;
(3) referring to Fig. 4, driving the roll 2 to rotate by using a numerically-controlled machine 1, and enabling an ultrashort pulse laser 3 to do transverse translational movement along a generatrix of the roll 2; and
(4) controlling the ultrashort pulse laser to selectively perform a layer-by-layer ablation on a surface material of the roll based on the designed surface topography.

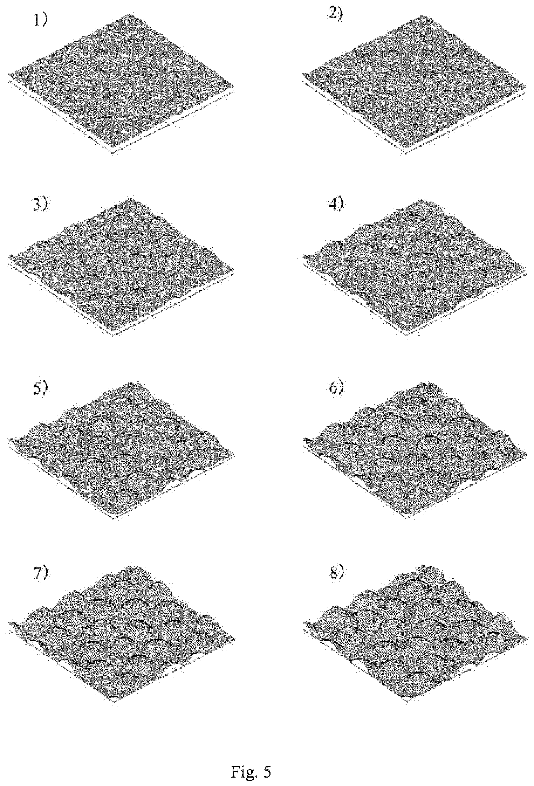

In the embodiment 1, a picosecond pulse laser with average power of 100W is used. After the laser is focused, each pulse will ablate a material with the diameter of about 5µm and the depth of about 1µm in the roll surface. Therefore, the maximum raised height of the microcosmic topography according to the embodiment 1 is required to be processed in 8 layers. Fig. 5 shows a material processing process of one microcosmic area of the surface of a roll, and a material is removed layer by layer through an ultrashort pulse laser to obtain a final-required surface topography.

Note that, cited above are only specific embodiments of the present invention, apparently, the present invention is not limited to the above embodiments, at the same time, many similar variations are present. All transformations directly derived from or associated with contents disclosed in the present invention by those skilled in the art shall fall within the scope of protection of the present invention as defined in the claims.

## Claims

1. A roll (1) for rolling a surface topography of a steel plate, wherein a plurality of raised textured points are arranged on a roll surface; a shape of each single textured point is circular or approximately circular, and the circular shape has a diameter of 50-150 µm; the each single textured point has a raised height of 2-12 µm, and the overlap among adjacent textured points is lower than 10 %; and the quantity variance of the textured points per square millimeter of the roll surface is lower than 20 %, and the coverage area ratio of the textured points in each square millimeter is 30-90 %.

2. The roll (1) according to claim 1, **characterized in that** bottom diameters of the raised textured points are not smaller than top diameters.

3. The roll (1) according to claim 1 or 2, **characterized in that** the overlap among adjacent textured points is lower than 5 %.

4. The roll (1) according to claim 3, **characterized in that** the overlap among adjacent textured points is 0.

5. The roll (1) according to any one of claims 1 to 4, **characterized in that** the quantity variance of the textured points per square millimeter of the roll (1) surface is lower than 10 %.

6. The roll (1) according to claim 5, **characterized in that** the quantity variance of the textured points per square millimeter of the roll (1) surface is lower than 5 %.

7. The roll (1) according to any one of claims 1 to 6, **characterized in that** the coverage area ratio of the textured points in each square millimeter of the roll surface is 50-80 %.

8. Use of the roll (1) of any one of claims 1 to 7 for rolling the surface topography of the steel plate, **characterized in that** the steel plate is a cold-rolled steel plate.

9. A method for manufacturing a roll (1) for rolling the surface topography of the steel plate according to any one of claims 1-8, **characterized by** comprising the following steps:
(1) performing a surface treatment on a feed roll (1) to control the surface roughness Ra of the roll (1) to be smaller than 0.5 µm; and
(2) performing a layer-by-layer ablation on a surface material of the roll (1) to form the textured points.

10. The method according to claim 9, **characterized in that** the layer-by-layer ablation on the surface material of the roll (1) is performed by adopting an ultrashort pulse laser; and during ablation, the ultrashort pulse laser does transverse translational movement along a generatrix of the feed roll (1), and meanwhile, the feed roll (1) is in a rotatable state after being driven.

## Patentansprüche

1. Walze (1) zum Walzen einer Oberflächentopographie einer Stahlplatte, wobei
eine Mehrzahl an erhabenen, texturierten Punkten auf einer Walzenoberfläche angeordnet sind;
eine Form von jedem einzelnen texturierten Punkt kreisförmig oder annähernd kreisförmig ist, und die kreisförmige Form einen Durchmesser von 50-150 µm aufweist; jeder einzelne texturierte Punkt eine erhabene Höhe von 2-12 µm aufweist, und die Überlappung aneinandergrenzender texturierter Punkte geringer als 10 % ist; und die Quantitätsvarianz der texturierten Punkte pro Quadratmillimeter der Walzenoberfläche geringer als 20 % ist, und das Abdeckungsflächenverhältnis der texturierten Punkte in jedem Quadratmillimeter 30-90 % beträgt.

2. Walze (1) nach Anspruch 1, **dadurch gekennzeichnet, dass** Bodendurchmesser der erhabenen, texturierten Punkte nicht kleiner als obere Durchmesser sind.

3. Walze (1) nach Anspruch 1 oder 2, **dadurch gekennzeichnet, dass** die Überlappung angrenzender texturierter Punkte geringer als 5 % ist.

4. Walze (1) nach Anspruch 3, **dadurch gekennzeichnet, dass** die Überlappung angrenzender texturierter Punkte 0 ist.

5. Walze (1) nach einem der Ansprüche 1 bis 4, **dadurch gekennzeichnet, dass** die Quantitätsvarianz der texturierten Punkte pro Quadratmillimeter der Walzenoberfläche geringer als 10 % ist.

6. Walze (1) nach Anspruch 5, **dadurch gekennzeichnet, dass** die Quantitätsvarianz der texturierten Punkte pro Quadratmillimeter der Walzenoberfläche geringer als 5 % ist.

7. Walze (1) nach einem der Ansprüche 1 bis 6, **dadurch gekennzeichnet, dass** das Abdeckungsflächenverhältnis der texturierten Punkte in jedem Quadratmillimeter der Walzenoberfläche 50-80 % beträgt.

8. Verwendung der Walze (1) nach einem der Ansprüche 1 bis 7 zum Walzen der Oberflächentopographie der Stahlplatte, **dadurch gekennzeichnet, dass** die Stahlplatte eine kaltgewalzte Stahlplatte ist.

9. Verfahren zum Herstellen einer Walze (1) zum Walzen der Oberflächentopographie der Stahlplatte nach einem der Ansprüche 1 bis 8, **dadurch gekennzeichnet, dass** es die folgenden Schritte aufweist:
1) Durchführen einer Oberflächenbehandlung bei einer Zuführwalze (1), um die Oberflächenrauheit Ra der Walze (1) so einzustellen, dass diese geringer als 0,5 µm ist; und
2) Durchführen einer schichtweisen Abtragung bei einem Oberflächenmaterial der Walze (1), um die texturierten Punkte zu bilden.

10. Verfahren nach Anspruch 9, **dadurch gekennzeichnet, dass** die schichtweise Abtragung bei dem Oberflächenmaterial der Walze (1) durch Einsatz eines Ultrakurzpulslasers durchgeführt wird; und dass während der Abtragung der Ultrakurzpulslaser eine querend-translatorische Bewegung entlang einer Mantellinie der Zuführwalze (1) vollführt, und dass sich währenddessen die Zuführwalze (1) in einem drehbaren Zustand befindet, nachdem sie angetrieben wurde.

## Revendications

1. Rouleau (1) destiné à mettre en forme une topographie de surface d'une plaque d'acier, dans lequel plusieurs points texturés surélevés sont prévus sur une surface du rouleau ; une forme de chaque point texturé est circulaire ou approximativement circulaire, et la forme circulaire possède un diamètre de 50 à 150 µm ; chaque point texturé présente une hauteur surélevée de 2 à 12 µm ; et le chevauchement entre les points texturés adjacents est inférieur à 10 % ; et l'écart de quantité des points texturés par millimètre carré de la surface du rouleau est inférieur à 20 %, et le rapport de surface de couverture des points texturés pour chaque millimètre carré est de 30 à 90 %.

2. Rouleau (1) selon la revendication 1, **caractérisé en ce que** les diamètres inférieurs des points texturés surélevés ne sont pas inférieurs aux diamètres supérieurs.

3. Rouleau (1) selon la revendication 1 ou 2, **caractérisé en ce que** le chevauchement entre les points texturés adjacents est inférieur à 5 %.

4. Rouleau (1) selon la revendication 3, **caractérisé en ce que** le chevauchement entre les points texturés adjacents est égal à 0.

5. Rouleau (1) selon l'une quelconque des revendications 1 à 4, **caractérisé en ce que** l'écart de quantité des points texturés par millimètre carré de la surface du rouleau (1) est inférieur à 10 %.

6. Rouleau (1) selon la revendication 5, **caractérisé en ce que** l'écart de quantité des points texturés par millimètre carré de la surface du rouleau (1) est inférieur à 5 %.

7. Rouleau (1) selon l'une quelconque des revendications 1 à 6, **caractérisé en ce que** le rapport de surface de couverture des points texturés pour chaque millimètre carré de la surface du rouleau est de 50 à 80 %.

8. Utilisation du rouleau (1) selon l'une quelconque des revendications 1 à 7 afin de mettre en forme la topographie de surface de la plaque d'acier, **caractérisée en ce que** la plaque d'acier est une plaque d'acier roulée à froid.

9. Procédé de fabrication d'un rouleau (1) destiné à mettre en forme la topographie de surface de la plaque d'acier selon l'une quelconque des revendications 1 à 8, **caractérisé en ce qu'**il comprend les étapes suivantes :
(1) la réalisation d'un traitement de surface sur un rouleau d'alimentation (1) afin de contrôler la rugosité de surface Ra du rouleau (1) de sorte qu'elle soit inférieure à 0,5 µm ; et
(2) la réalisation d'une ablation couche par couche sur un matériau de surface du rouleau (1) afin de former les points texturés.

10. Procédé selon la revendication 9, **caractérisé en ce que** l'ablation couche par couche sur le matériau de surface du rouleau (1) est effectuée à l'aide d'un laser à impulsion ultra-courte ; et, pendant l'ablation, le laser à impulsion ultra-courte effectue un mouvement de translation transversal le long d'une génératrice du rouleau d'alimentation (1), et, pendant ce temps, le rouleau d'alimentation (1) se trouve dans un état rotatif après avoir été entraîné.
